# EUROPÄISCHE PATENTSCHRIFT

(11) **EP 2 616 703 B1**
(45) Veröffentlichungstag und Bekanntmachung des Hinweises auf die Patenterteilung: **21.10.2015**
(21) Anmeldenummer: 11749152.2
(22) Anmeldetag: 18.08.2011
(51) Int. Cl.: F16D 23/06

(54) **SYNCHRONISATIONSEINHEIT FÜR EINE FORMSCHLÜSSIGE DOPPELSCHALTKUPPLUNG**
SYNCHRONIZATION UNIT FOR A POSITIVE DUAL CLUTCH
UNITÉ DE SYNCHRONISATION POUR UN EMBRAYAGE PRINCIPAL À COMPLÉMENTARITÉ DE FORME

(30) Priorität: 14.09.2010 DE 102010046139
(43) Veröffentlichungstag der Anmeldung: 24.07.2013
(73) Patentinhaber: GKN Stromag AG, 59425 Unna (DE)
(72) Erfinder: RANK, Robert, 59755 Arnsberg (DE); GLOMM, Matthias, 58640 Iserlohn (DE); HAMPEL, Christian, 59423 Unna (DE); HÄSEKER, Thomas, 92283 Lauterhofen (DE)
(74) Vertreter: Patentanwälte Ruff, Wilhelm, Beier, Dauster & Partner mbB
(86) Internationale Anmeldenummer: PCT/EP2011/064203
(87) Internationale Veröffentlichungsnummer: WO 2012/034817

(56) Entgegenhaltungen:
- EP-A1- 1 162 380
- EP-A1- 1 298 340
- EP-A1- 2 182 233
- WO-A1-2008/007083
- DE-A1- 2 252 520
- DE-A1- 2 538 781
- DE-A1-102007 061 646
- FR-A1- 2 818 339
- US-A- 4 830 159

## Beschreibung

Die Erfindung betrifft eine Synchronisationseinheit für eine formschlüssige Döppelschaltkupplung, insbesondere für ein Zahnradgetriebe, mit einem mit einer Arbeitswelle axial und drehfest verbundenen Muffenträger sowie mit einer relativ zu dem Muffenträger drehfesten und axial verschiebbaren Schaltmuffe, sowie mit zwei reibschlüssig wirksamen Synchronkupplungen, die gegenüberliegenden Axialseiten dies Muffenträgers und jeweils einem Schaltkupplungsrad zugeordnet sind, wobei jede Synchronkupplung ein Lamellenpaket aufweist, und mit mehreren über den Umfang des Muffenträgers verteilt angeordneten Druckstücken, die durch die Schaltmuffe für eine Beaufschlagung der einen oder der anderen Synchronkupplung axial verstellbar gelagert sind.

Eine derartige Synchronisationseinheit ist aus der DE 32 08 945 A1 bekannt. Die bekannte Synchronisationseinheit ist für eine formschlüssig wirksame Doppelschaltkupplung eines Zahnradgetriebes vorgesehen, das insbesondere im Kraftfahrzeugbereich eingesetzt wird. Die bekannte Synchronisationseinheit weist eine als Getriebewelle gestaltete Arbeitswelle auf, auf der der Muffenträger dreh- und axialfest angeordnet ist. Der Muffenträger wird von einer Schaltmuffe drehfest umgeben, die axial relativ zum Muffenträger beweglich ist. Auf gegenüberliegenden Axialseiten des Muffenträgers ist jeweils ein Schaltkupplungsrad vorgesehen, das an einem entsprechenden Zahnrad des Zahnradgetriebes befestigt ist. Dem Muffenträger sind zwei axial beweglich gelagerte Synchronringe von zwei gegenüberliegend angeordneten Synchronkupplungen zugeordnet, die durch am Muffenträger gelagerte Druckstücke axial verlagerbar sind. Zwischen jedem Synchronring und dem benachbarten Schaltkupplungsrad ist ein Lamellenpaket angeordnet, das durch entsprechende axiale Druckbeaufschlagung des jeweiligen Synchronringes zusammengepresst wird und so reibschlüssig ein Drehmoment auf das Schaltkupplungsrad übertragen kann. Die Bewegung des Druckstückes erfolgt durch axiale Verschiebung der Schaltmuffe, die über ein Handgestänge oder ähnliches verlagerbar ist. Nach erfolgter Drehzahlangleichung zwischen Synchronring und zugeordnetem Schaltkupplungsrad wird die Schaltmuffe soweit verschoben, dass zwischen Synchronring und Schaltkupplungsrad eine formschlüssige Drehmitnahme erzielbar ist. Hierfür ist die Schaltmuffe mit einer innenseitigen Axialverzahnung versehen. Das Schaltkupplungsrad und der zugeordnete Synchronring weisen auf gleichem Teilkreisdurchmesser komplementäre Außenverzahnungen auf, die ebenfalls als Axialverzahnungen ausgeführt sind. Aufbau und Funktion der Synchronkupplung für die andere Axialseite des Muffenträgers entsprechen dem beschriebenen Aufbau und der beschriebenen Funktion. Eine weitere Lamellen-Synchronisierung ist z.B. aus der DE 25 38 781 bekannt.

Aufgabe der Erfindung ist es, eine Synchronisationseinheit der eingangs genannten Art zu schaffen, die gegenüber dem Stand der Technik eine reduzierte axiale Baulänge aufweist.

Diese Aufgabe wird dadurch gelöst, dass muffenträgerseitige Synchronringe der Synchronkupplung und der Muffenträger axial ineinandergefügte Umfangsabschnitte aufweisen. Die Synchronringe und der Muffenträger greifen hierdurch axial ineinander, wobei der Muffenträger und/oder die Synchronringe komplementäre axiale Aussparungen und/oder axiale Fortsätze aufweisen. Durch die erfindungsgemäße Lösung sind die Synchronringe und der Muffenträger axial ineinandergeschachtelt, so dass sich für diese Funktionseinheit eine reduzierte axiale Baulänge - auf eine Drehachse der Arbeitswelle bezogen - ergibt. Hierdurch ist es möglich, die gesamte Synchronisationseinheit mit reduzierter axialer Baulänge zu gestalten. Die erfindungsgemäße Lösung eignet sich in besonders vorteilhafter Weise für Zahnradgetriebe von Maschinen oder von Kraftfahrzeugen wie Personen-, Last- oder Nutzkraftfahrzeugen.

In Ausgestaltung der Erfindung ist der Muffenträger mit mehreren, über seinen Umfang verteilt angeordneten axialen Aussparungen versehen, die alternierend zu gegenüberliegenden Stirnseiten des Muffenträgers hin offen sind. Die in Umfangsrichtung versetzt zueinander angeordneten, zu gegenüberliegenden Stirnseiten des Muffenträgers hin offenen Aussparungen dienen zur Aufnahme beider Synchronringe von den jeweiligen gegenüberliegenden axialen Stirnseiten her.

In weiterer Ausgestaltung der Erfindung ist jeder Synchronring mit einer der Anzahl an axialen Aussparungen einer Stirnseite des Muffenträgers entsprechenden Anzahl von Außenverzahnungsabschnitten versehen, die axial und radial in die Aussparungen eingepasst sind. Durch diese Ausgestaltung muss der Synchronring nicht über seinen gesamten Umfang mit einer Außenverzahnung versehen sein. Vielmehr genügt es über eine erheblich reduzierte Umfangslänge, die auf die Umfangslänge der Aussparungen des Muffenträgers abgestimmt ist, die axiale Außenverzahnung vorzusehen. Die Herstellung der Synchronringe wird hierdurch vereinfacht und ist kostengünstig. Vorzugsweise weist jeder Synchronring einen Trägerring auf, von dem aus die Außenverzahnungsabschnitte radial nach außen abragen und in montiertem Zustand in die Aussparungen des Muffenträgers hineinragen. Die Umfangslänge der Außenverzahnungsabschnitte ist geringer als die Umfangserstreckung der korrespondierenden axialen Aussparung des Muffenträgers, um eine gewisse Beweglichkeit des Synchronringes in Umfangsrichtung relativ zum Muffenträger zu ermöglichen.

In vorteilhafter Weise sind demzufolge die Außenverzahnungsabschnitte mit Spiel in Umfangsrichtung in den zugeordneten Aussparungen angeordnet.

In weiterer Ausgestaltung der Erfindung weist die Schaltmuffe eine zu den Außenverzahnungsabschnitten komplementäre axiale Innenverzahnung auf, die abschnittsweise im Bereich der Außenverzahnungsäbschnitte jedes Synchronringes und auf radialer Höhe der Aussparungen des Muffenträgers ausgespart ist. Diese Ausgestaltung ist notwendig, um in einer Neutralstellung der Schaltmuffe eine formschlüssige Verbindung zu den Synchronringen zu vermeiden. Die Beweglichkeit der Synchronringe wäre hierdurch beeinträchtigt.

In weiterer Ausgestaltung der Erfindung, sind die ausgesparten Bereiche der Schaltmuffe komplementär zu den Aussparungen des Muffenträger und alternierend über den Umfang verteilt von gegenüberliegenden Stirnseiten her vorgesehen. Dadurch ist in der Neutralstellung der Schaltmuffe gewährleistet, dass die Schaltmuffe zu keinem der beiden Synchronringe formschlüssig in Verbindung steht. In Umfangsrichtung zwischen den Aussparungen weist der Muffenträger seine volle axiale Länge auf, die durchgängig mit einer axialen Außenverzahnung versehen ist.

In weiterer Ausgestaltung der Erfindung weisen sowohl der Muffenträger als auch die drehfest und axial beweglich auf dem Muffenträger angeordnete Schaltmuffe komplementäre Axialverzahnungsabschnitte auf, die sich über die gesamte axiale Länge von Muffenträger und Schaltmuffe erstrecken, wobei die Axialverzahnungsabschnitte - in Umfangsrichtung gesehen - zwischen den Aussparungen des Muffenträgers und den ausgesparten Bereichen der Innenverzahnung der Schaltmuffe vorgesehen sind. Dadurch ist eine große axiale Führungslänge zwischen Muffenträger und Schaltmuffe erzielbar, wodurch Kippmomente der Schaltmuffe relativ zum Muffenträger reduziert werden.

In weiterer Ausgestaltung der Erfindung sind die Druckstücke axial benachbart zu den Aussparungen für die Verzahnungsabschnitte im Muffenträger angeordnet. Dadurch können die Druckstücke direkt axial auf die Synchronringe wirken.

In weiterer Ausgestaltung der Erfindung umfassen die Druckstücke druckfederbelastete Kugelelemente, die mit einer innenseitigen Umfangsnut der Schaltmuffe zusammenwirken, um eine axiale Verlagerbarkeit der Druckstücke bei einer Axialbewegung der Schaltmuffe zu gewährleisten. Die innenliegende Umfangsnut der Schaltmuffe und die Kugelelemente der Druckstücke greifen in der Neutralstellung der Schaltmuffe und der Druckstücke ineinander und bleiben auch noch während der Ansynchronisierung miteinander in Wirkverbindung. Bei weitergehender axialer Verschiebung der Schaltmuffe, um einen Formschluss zwischen den entsprechenden Kupplungselementen der Doppelschaltkupplung zu erzielen, geraten die Umfangsnut und die Kugelelemente der Druckstücke außer Eingriff zueinander.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer, aufgeschnittener Darstellung eine Ausführungsform einer erfindungsgemäßen Synchronisationseinheit für eine formschlüssige Doppelschaltkupplung,
- Fig. 2: die Synchronisationseinheit nach Fig. 1 aus einer anderen Perspektive,
- Fig. 3: die Synchronisationseinheit nach den Fig. 1 und 2 unter Weglassung einer außenliegenden Schaltmuffe,
- Fig. 4: die Synchronisationseinheit nach den Fig. 1 bis 3 mit in eine formschlüssige Schaltstellung verschobener Schaltmuffe,
- Fig. 5: die Synchronisationseinheit nach Fig. 4 mit in Neutralstellung befindlicher Schaltmuffe,
- Fig. 6: einen Muffenträger der Synchronisationseinheit nach den Fig. 1 bis 5,
- Fig. 7: einen Synchronring der Synchronisationseinheit nach den Fig. 1 bis 5,
- Fig. 8: die Schaltmuffe für die Synchronisationseinheit nach den Fig. 1 bis 5 und
- Fig. 9: in stark vergrößerter Darstellung einen Ausschnitt der Synchronisationseinheit nach Fig. 3 ohne Schaltmuffe.

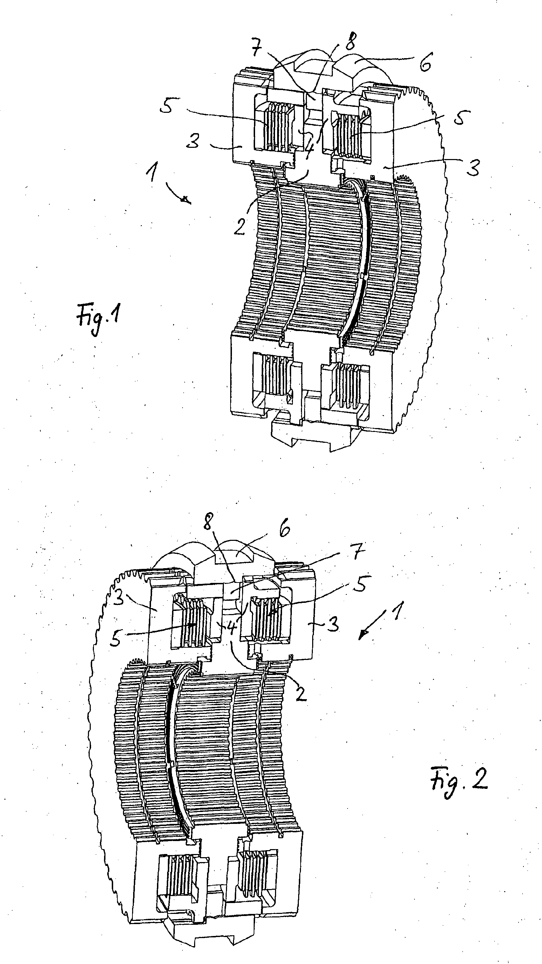

Eine formschlüssige Doppelschaltkupplung, wie sie anhand der Fig. 1 und 2 ausschnittsweise erkennbar ist, ist für ein Zahnradgetriebe eines Kraftfahrzeuges vorgesehen und dient zum Hin- und Herschalten zwischen zwei koaxialen, unterschiedlichen Gangzahnrädern des Zahnradgetriebes. Die Doppelschaltkupplung weist eine Synchronisationseinheit gemäß den Fig. 1 bis 9 auf, die vor einem formschlüssigen Schaltvorgang zwischen einer nicht dargestellten Getriebewelle (Arbeitswelle) und einem der beiden Gangzahnräder eine Synchronisierung der Drehzahlen der Getriebewelle und des entsprechenden Gangzahnrades vornehmen.

Auch an der nicht dargestellten Getriebewelle ist ein ringförmiger Muffenträger 2 drehfest und axial gesichert befestigt. Die zur Getriebewelle koaxialen Gangzahnräder sind drehbeweglich auf der Getriebewelle gelagert. Mit jedem Gangzahnrad fest verbunden, d.h. sowohl drehfest als auch axialfest, ist jeweils ein Schaltkupplungsrad 3. Die beiden Schaltkupplungsräder 3 sind auf gegenüberliegenden axialen Stirnseiten des Muffenträgers 2 angeordnet und weisen zum Muffenträger 2 jeweils den gleichen axialen Abstand auf. Zur Synchronisierung der entsprechenden Drehzahlen ist jeder Axialseite eine reibschlüssig wirksame Synchronkupplung 5 in Form einer Lamellenkupplung zugeordnet. Jede Synchronkupplung weist einen axialfesten Kupplungsring (nicht näher bezeichnet) im Bereich des jeweiligen Schaltkupplungsrades 3 sowie einen axial beweglichen Synchronring 4 auf, der unmittelbar am Muffenträger 2 anliegt. Jedes Lamellenpaket ist mit mehreren Innenlamellen sowie mit dazwischen angeordneten Außenlamellen versehen, wobei die Innenlamellen drehfest zu dem jeweiligen Schaltkupplungsrad 3 und die Außenlamellen drehfest zu dem benachbarten Synchronring 4 sind. Sowohl die Innenlamellen als auch die Außenlamellen sind koaxial zu einer Drehachse der Getriebewelle und damit auch zu einer Drehachse der Doppelschaltkupplung axial beweglich angeordnet. Jedes Schaltkupplungsrad 3 weist zur Lagerung der Innenlamellen einen axial zum Muffenträger 2 hin abragenden Nabenbereich auf, der mit einer axialen Außenverzahnung versehen ist, auf der die Innenlamellen drehschlüssig aber axial verschiebbar gehalten sind. Jeder der beiden Synchronringe 4 weist zur drehfesten Halterung der Außenlamellen jedes Lamellenpaketes Verzahnungsabschnitte 11 auf, die mit entsprechend gestalteten, axialen Innenverzahnungen 13 versehen sind. Die Verzahnungsabschnitte 11 sind zudem mit axialen Außenverzahnungen 14 versehen, die stufenförmig zu den Innenverzahnungen 13 axial und radial nach außen abgesetzt sind, deren Teilkreisdurchmesser dem Teilkreisdurchmesser axialer Außenverzahnungen der Schaltkupplungsräder 3 entsprechen und die in ihrer Teilung identisch zu der axialen Außenverzahnung der Schaltkuplungsräder 3 gestaltet sind.

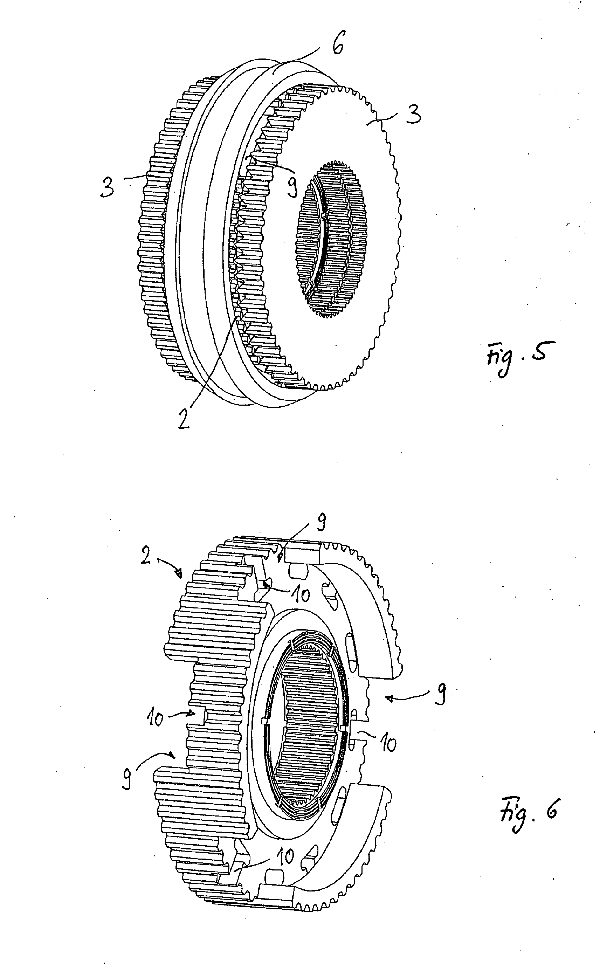

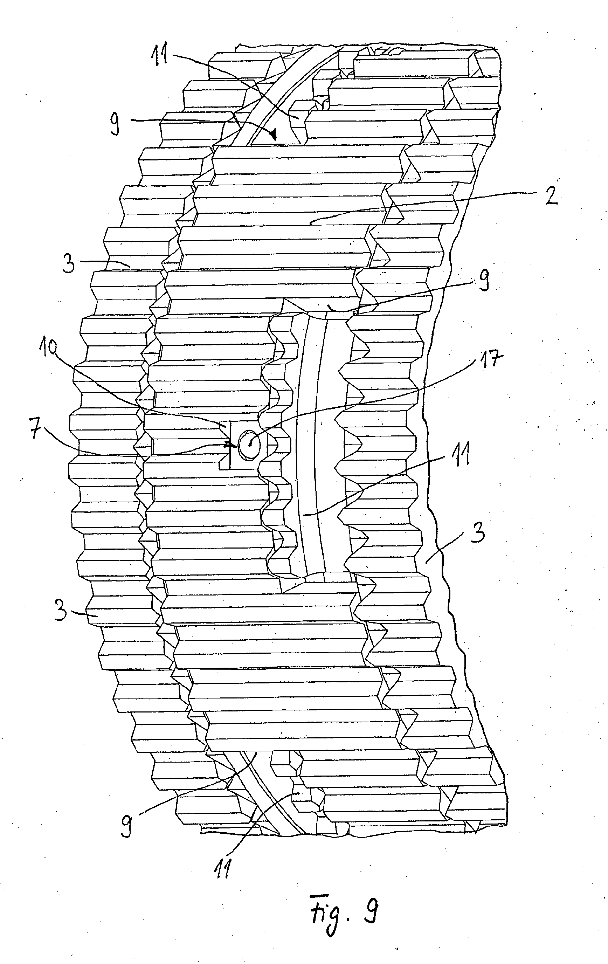

Um die Synchronringe 4 für eine entsprechende Betätigung der links- oder rechtsseitigen Lamellenkupplung axial verschieben zu können, sind über den Umfang des Muffenträgers gleichmäßig verteilt insgesamt sechs Druckstücke 7 vorgesehen, die im Muffenträger 2 drehfest und axial beweglich gehalten sind. Hierzu sind im Muffenträger 2 insgesamt sechs Druckstückaussparungen 10 vorgesehen (Fig. 6 und 9). Jedes Druckstück 7 weist ein druckfederbelastetes Kugelelement 17 auf, das formschlüssig mit einer innenseitigen Umfangsnut 8 einer Schaltmuffe 6 zusammenwirkt, die drehschlüssig, aber axial verschiebbar auf dem Muffenträger 2 gehalten ist. Für diese drehschlüssige Mitnahme, jedoch axiale Verschiebbarkeit der Schaltmuffe 6 auf dem Muffenträger 2 ist der Muffenträger 2 mit einer nicht näher bezeichneten axialen Außenverzahnung versehen, deren Teilkreisdurchmesser und Teilung den axialen Außenverzahnungen der Schaltkupplungsräder 3 und der Verzahnungsabschnitte 11 der Synchronringe 4 entsprechen. Die Schaltmuffe 6 weist ringförmig umlaufend eine komplementäre Innenverzahnung 15 auf, die wie die Außenverzahnung des Muffenträgers 2 als Axialverzahnung gestaltet ist. Außenseitig greift an der Schaltmuffe in grundsätzlich bekannter und daher nicht näher gezeigter Weise ein Betätigungsgestänge des Zahnradgetriebes an.

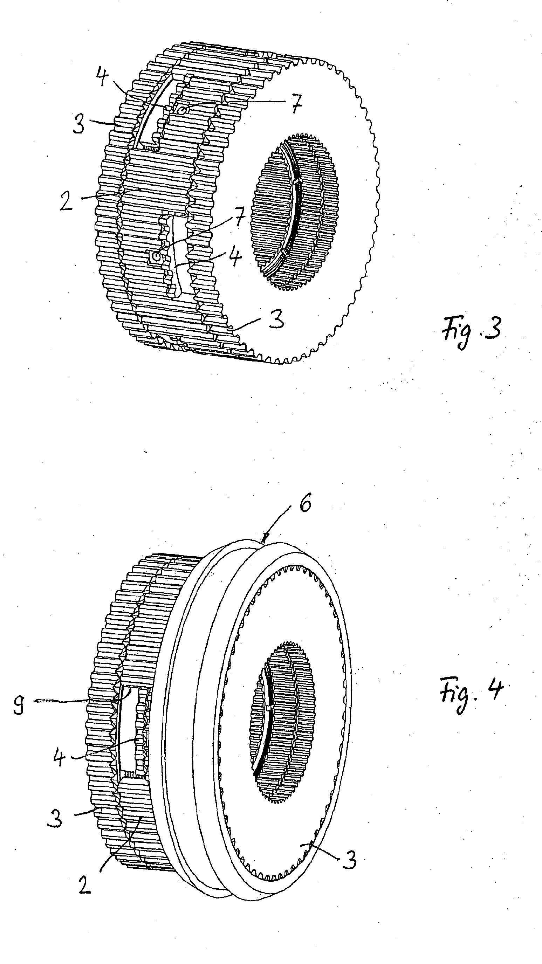

Wie anhand der Fig. 3 bis 9 erkennbar ist, ist der Muffenträger 2 über seinen Umfang verteilt mit insgesamt sechs axialen Aussparungen 9. versehen, von denen jeweils drei axiale Aussparungen 9 gegenüberliegenden axialen Stirnseiten des Muffenträgers 2 zugeordnet sind. Die jeweils drei axialen Aussparungen 9 jeder axialen Stirnseite des Muffenträgers 2 sind gleichmäßig über den Umfang verteilt und weisen demzufolge Umfangswinkel von 120° zueinander auf. Die anderen axialen Aussparungen 9 auf der gegenüberliegenden axialen Stirnseite sind um die Hälfte des Umfanges zwischen zwei axialen Aussparungen versetzt am Umfang des Muffenträgers 2 angeordnet, so dass die insgesamt sechs axialen Aussparungen 9 in Umfangswinkeln von 60° alternierend - auf die Zeichnungsdarstellung bezogen - links- und rechtsseitig über den Umfang des Muffenträgers 2 verteilt angeordnet sind, indem jeweils einer zu einer linken Stirnseite hin offenen axialen Aussparung 9 in Umfangsrichtung eine axiale Aussparung 9 einer rechten Stirnseite des Muffenträgers 2 und im weiteren Verlauf in Umfangsrichtung wieder eine linke axiale Aussparung folgen. Auf halber Umfangslänge jeder axialen Aussparung 9 ist die jeweilige Druckstückaussparung 10 mittig vorgesehen.

Die axialen Aussparungen 9 dienen zur axialen Aufnahme der Verzahnungsabschnitte 11 der beiden Synchronringe 4, wobei der eine Synchronring 4 der linken axialen Stirnseite und der andere Synchronring 4 der rechten axialen Stirnseite des Muffenträgers 2 zugeordnet sind. Jeder Synchronring 4 weist demzufolge gleichmäßig über seinen Umfang verteilt drei Verzahnungsabschnitte 11 auf. Jeder Synchronring 4 ist mit einem Trägerring 12 versehen, an dessen Außenumfang die Verzahnungsabschnitte 11 zur gleichen axialen Stirnseite axial abragend befestigt sind. Beim dargestellten Ausführungsbeispiel sind die Verzahnungsabschnitte 11 am Außenumfang des Trägerringes 12 festgeschweißt. Bei anderen, nicht dargestellten Ausführungsformen ist vorgesehen, die Verzahnungsabschnitte 11 am Trägerring 12 einstückig auszuformen oder die Verzahnungsabschnitte 11 mit Hilfe von mechanischen Befestigungsmitteln am Trägerring zu befestigen.

Die Länge der Verzahnungsabschnitte 11 in Umfangsrichtung ist etwas geringer als die Umfangslänge der axialen Aussparungen 9 des Muffenträgers 2, wie anhand der Fig. 3, 4 und 9 erkennbar ist. Die Dicke, d.h. axiale Erstreckung der Außenverzahnungen 14 der Verzahnungsabschnitte 11 ist geringer als eine axiale Tiefe der zugeordneten Aussparungen.

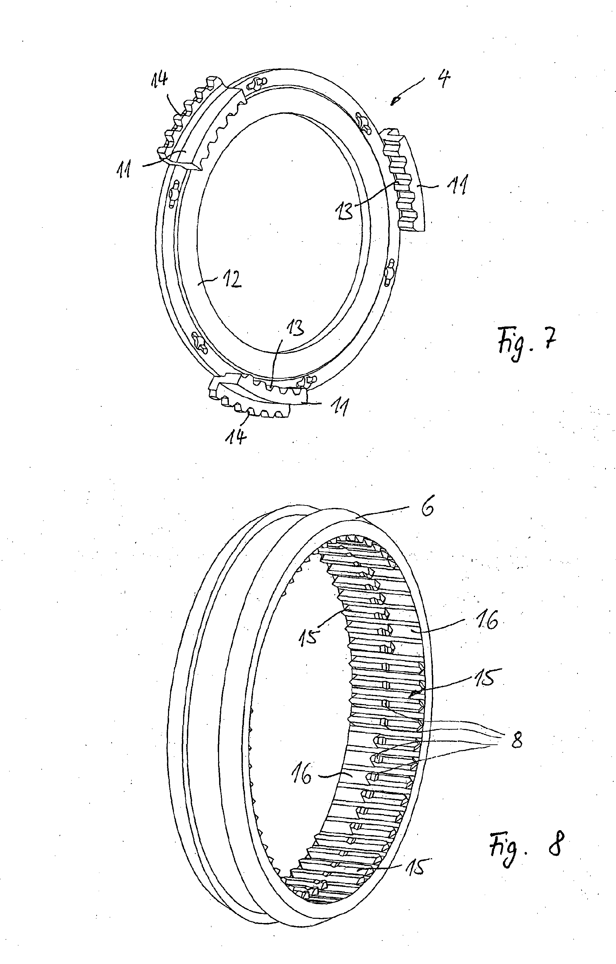

Nach Montage der Synchronringe 4 ragen die Synchronringe im Bereich ihrer Außenverzahnungen 14 somit nicht axial über den Muffenträger 2 hinaus. Die Innenverzahnungen 13, die radial nach innen und axial seitlich versetzt sind, können axial über die Aussparungen hinausragen, falls dies aufgrund einer spezifischen Ausgestaltung benötigt ist. Die Innenverzahnung 15 der Schaltmuffe 6 ist auf Höhe der axialen Aussparungen 9 und damit auf der Höhe der Außenverzahnungen 14 der Verzahnungsabschnitte 11 der Synchronringe 4 ebenfalls mit Aussparungen 16 versehen, um trotz der axial im Muffenträger 2 integrierten Synchronringe 4 die gewünschten Synchronisations- und Schaltfunktionen erzielen zu können. In Fig. 8 ist auch die Umfangsnut 8 auf der Innenseite der Schaltmuffe 6 erkennbar, in die die Kugelelemente 17 der Druckstücke 7 eingreifen.

Die Funktion der verschiedenen Elemente der Doppelschaltkupplung unterscheidet sich grundsätzlich nicht von der Funktion bekannter Doppelschaltkupplungen. In der Darstellung gemäß den Fig. 1, 2 und 5 befindet sich die Schaltmuffe 6 in ihrer Neutralstellung, in der beide Lamellenkupplungen 5 gelüftet sind und der Muffenträger 2 mit seiner Getriebewelle sich unabhängig von den Gangzahnrädern und den zugeordneten Schaltkupplungsrädern 3 dreht. Sobald nun die Schaltmuffe 6 aus dieser Neutralstellung axial verschoben wird, nimmt die Umfangsnut 8 über die Kugelelemente 17 die entsprechenden Druckstücke 7 im Muffenträger 2 axial mit, wodurch diese auf den Trägerring 12 des entsprechenden Synchronringes 4 eine axiale Druckkraft ausüben. Geleichzeitig geraten entsprechende, keilförmig spitz zulaufende Stirnabschnitte der Innenverzahnung 15 der Schaltmuffe 6 mit entsprechenden Stirnseiten der Außenverzahnungen 14 der Verzahnungsabschnitte 11 in Anlage und drücken diese zwangsläufig in eine axial fluchtende Ausrichtung. Gleichzeitig wird über das entsprechende Lamellenpaket durch die Axialverschiebung des Synchronringes 4 ein Reibschluss zum benachbarten Schaltkupplungsrad 3 aufgebaut. Sobald die Drehzahlen des Schaltkupplungsrades 3 und des Muffenträgers 2 über die entsprechende Lamellenkupplung 5 angeglichen sind, wird die Schaltmuffe 6 vollständig in ihre Schaltstellung verschoben, so dass sie das entsprechende Schaltkupplungsrad 3 axial übergreift (siehe die Darstellung in Fig. 4). Damit ist der Schaltvorgang beendet. Bei dieser Axialverschiebung der Schaltmuffe 6 wird jedes Kugelelement 17 der Druckstücke 10 gegen die Druckkraft der innenliegenden Druckfeder aus der innenliegenden Umfangsnut 8 der Schaltmuffe 6 herausgedrückt. Eine erneute Rückkehr der Schaltmuffe 6 in die Neutralstellung ist durch einfache axiale Verschiebung möglich, da das Schaltkupplungsrad 3, der zugehörige Synchronring 4 und der Muffenträger drehfest und mit ihren Verzahnungen axial fluchtend durch die Schaltmuffe 6 gehalten sind. Dabei werden die Druckstücke 7 wieder mit zurückgenommen, indem die Kugelelemente 17 wieder in die Umfangsnut 8 bei einer entsprechenden axialen Rückbewegung der Schaltmuffe hineingleiten und formschlüssig axial in die Neutralstellung zurückbewegt werden.

## Patentansprüche

1. Synchronisationseinheit für eine formschlüssige Doppelschaltkupplung, mit einem mit einer Arbeitswelle axial und drehfest verbundenen Muffenträgers (2) sowie mit einer relativ zu dem Muffenträger drehfesten und axial verschiebbaren Schaltmuffe (6), sowie mit zwei reibschlüssig wirksamen Synchronkupplungen (5), die gegenüberliegenden Axialseiten des Muffenträgers und jeweils einem Schaltkupplungsrad (3) zugeordnet sind, wobei jede Synchronkupplung ein Lamellenpaket (5) aufweist, und mit mehreren über den Umfang des Muffenträgers (2) verteilt angeordneten Druckstücken (7), die durch die Schaltmuffe (6) für eine Beaufschlagung der einen oder der anderen Synchronkupplung axial verstellbar gelagert sind, wobei muffenträgerseitige Synchronringe (4) der Synchronkupplung und der Muffenträger (2) axial ineinandergefügte Umfangsabschnitte aufweisen, **dadurch gekennzeichnet, dass** der Muffenträger (2) mit mehreren über seinen Umfang verteilt angeordneten axialen Aussparungen (9) versehen ist, die alternierend zu gegenüberliegenden Stirnseiten des Muffenträgers (2) hin offen sind, dass jeder Synchronring (4) mit einer der Anzahl an axialen Aussparungen (9) einer Stirnseite des Muffenträgers (2) entsprechenden Anzahl von Verzahnungsabschnitten (11) versehen ist, die axial und radial in die Aussparungen (9) eingepasst sind, dass die Schaltmuffe (6) eine zu den Verzahnungsabschnitten (11) komplementäre axiale Innenverzahnung (15) aufweist, die abschnittsweise im Bereich der Verzahnungsabschnitte (11) jedes Synchronringes (4) und auf radialer Höhe der Aussparungen (9) des Müffenträgers (2) ausgespart ist, und dass die ausgesparten Bereiche (16) der Schaltmuffe (6) komplementär zu den Aussparungen (9) des Muffenträgers (2) alternierend über den Umfang verteilt von gegenüberliegenden Stirnseiten her eingebracht sind.

2. Synchronisationseinheit nach Anspruch 1, **dadurch gekennzeichnet, dass** die Verzahnungsabschnitte (11) mit Spiel in Umfangsrichtung in den zugeordneten Aussparungen (9) angeordnet sind.

3. Synchronisationseinheit nach wenigstens einem der vorhergehenden Ansprüche, **dadurch gekennzeichnet, dass** sowohl der Muffenträger (2) als auch die drehfest und axial beweglich auf dem Muffenträger (2) angeordnete Schaltmuffe (6) komplementäre Axialverzahnungsabschnitte (15) aufweisen, die sich über die gesamte axiale Länge von Muffenträger (2) und Schaltmuffe (6) erstrecken, wobei die Axialverzahnungsabschnitte - in Umfangsrichtung gesehen - zwischen den Aussparungen (9) des Muffenträgers (2) und den ausgesparten Bereichen (16) der Innenverzahnung (15) der Schaltmuffe (6) vorgesehen sind.

4. Synchronisationseinheit nach wenigstens einem der vorhergehenden Ansprüche, **dadurch gekennzeichnet, dass** die Druckstücke (7) axial benachbart zu den Aussparungen (9) für die Verzahnungsabschnitte (11) im Muffenträger (2) angeordnet sind.

5. Synchronisationseinheit nach Anspruch 4, **dadurch gekennzeichnet, dass** die Druckstücke (7) druckfederbelastete Kugelelemente (17) umfassen, die mit einer innenseitigen Umfangsnutanordnung (8) der Schaltmuffe (6) zusammenwirken, um eine axiale Verlagerbarkeit der Druckstücke (7) bei einer Axialbewegung der Schaltmuffe (6) zu gewährleisten.

## Claims

1. A synchronization unit for a positive dual clutch, having a sleeve carrier (2) which is connected axially and fixedly to a working shaft so as to rotate with it, and having a selector sleeve (6) which is fixed rotationally and can be displaced axially relative to the sleeve carrier, and having two frictionally acting synchronizer clutches (5) which are assigned to opposite axial sides of the sleeve carrier and in each case one clutch gear (3), each synchronizer clutch having a multiple disk assembly (5), and having a plurality of pressure pieces (7) which are arranged distributed over the circumference of the sleeve carrier (2) and are mounted in an axially adjustable manner by way of the selector sleeve (6) for loading one or the other synchronizer clutch, wherein sleeve-carrier-side synchronizer rings (4) of the synchronizer clutch and the sleeve carrier (2) have axially indented circumferential sections,
**characterized in that**
the sleeve carrier (2) is provided with a plurality of axial cutouts (9) which are arranged distributed over its circumference and are open in an alternating manner toward opposite end sides of the sleeve carrier (2), that each synchronizer ring (4) is provided with a number of toothing sections (11) which corresponds to the number of axial cutouts (9) of an end side of the sleeve carrier (2), which toothing sections are fitted axially and radially into the cutouts (9), that the selector sleeve (6) has an axial inner toothing system (15) which is complementary with respect to the toothing sections (11) and is recessed in sections in the region of the toothing sections (11) of each synchronizer ring (4) and at the radial level of the cutouts (9) of the sleeve carrier (2), and that the recessed regions (16) of the selector sleeve (6) are made from opposite end sides in a complementary manner with respect to the cutouts (9) of the sleeve carrier (2) such that they alternate and are distributed over the circumference.

2. The synchronization unit according to claim 1, **characterized in that** the toothing sections (11) are arranged in the associated cutouts (9) with play in the circumferential direction.

3. The synchronization unit according to at least one of the preceding claims, **characterized in that** both the sleeve carrier (2) and the selector sleeve (6) which is arranged on the sleeve carrier (2) in a rotationally fixed and axially movable manner have complementary axial toothing sections (15) which extend over the entire axial length of sleeve carrier (2) and selector sleeve (6), the axial toothing sections being provided, as viewed in the circumferential direction, between the cutouts (9) of the sleeve carrier (2) and the recessed regions (16) of the internal toothing system (15) of the selector sleeve (6).

4. The synchronization unit according to at least one of the preceding claims, **characterized in that** the pressure pieces (7) are arranged axially adjacently to the cutouts (9) for the toothing sections (11) in the sleeve carrier (2).

5. The synchronization unit according to claim 4, **characterized in that** the pressure pieces (7) comprise ball elements (17) which are loaded by compression spring and interact with an inside circumferential groove arrangement (8) of the selector sleeve (6), in order to ensure axial displaceability of the pressure pieces (7) during an axial movement of the selector sleeve (6).

## Revendications

1. Unité de synchronisation pour un embrayage double à complémentarité de forme, avec un support de manchon (2) assemblé sans rotation et axialement à un arbre de travail ainsi qu'avec un manchon de commutation (6) calé en rotation et déplaçable axialement par rapport au support de manchon, ainsi qu'avec deux embrayages synchrones actifs par friction (5), qui sont associés à des côtés axiaux opposés du support de manchon et chacun à une roue d'embrayage (3), dans lequel chaque embrayage synchrone présente un paquet de lamelles (5), et avec plusieurs pièces de pression (7) disposées de façon répartie sur la périphérie du support de manchon (2), qui sont montées de façon déplaçable axialement par le manchon de commutation (6) pour actionner l'un ou l'autre embrayage synchrone, dans lequel des bagues de synchronisation (4) de l'embrayage synchrone du côté du support de manchon et le support de manchon (2) présentent des parties périphériques engagées axialement l'une dans l'autre, **caractérisée en ce que** le support de manchon (2) est muni de plusieurs évidements axiaux (9) disposés de façon répartie sur sa périphérie, qui sont ouverts en alternance vers des côtés frontaux opposés du support de manchon (2), **en ce que** chaque bague de synchronisation (4) est munie d'un nombre de parties dentées (11) correspondant au nombre d'évidements axiaux (9) d'un côté frontal du support de manchon (2), qui sont ajustées axialement et radialement dans les évidements (9), **en ce que** le manchon de commutation (6) présente une denture intérieure axiale (15) complémentaire aux parties dentées (11), qui est évidée localement dans la région des parties dentées (11) de chaque bague de synchronisation (4) et à hauteur radiale des évidements (9) du support de manchon (2), et **en ce que** les régions évidées (16) du manchon de commutation (6) sont réalisées de façon complémentaire aux évidements (9) du support de manchon (2) réparties en alternance sur la périphérie de côtés frontaux opposés.

2. Unité de synchronisation selon la revendication 1, **caractérisée en ce que** les parties dentées (11) sont disposées avec du jeu en direction périphérique dans les évidements associés (9).

3. Unité de synchronisation selon au moins une des revendications précédentes, **caractérisée en ce qu'**aussi bien le support de manchon (2) que le manchon de commutation (6) disposé de façon mobile axialement et sans rotation sur le support de manchon (2) présentent des parties dentées axiales complémentaires (15), qui s'étendent sur toute la longueur axiale du support de manchon (2) et du manchon de commutation (6), dans laquelle les parties dentées axiales - vues dans la direction périphérique - sont prévues entre les évidements (9) du support de manchon (2) et les régions évidées (16) de la denture intérieure (15) du manchon de commutation (6).

4. Unité de synchronisation selon au moins une des revendications précédentes, **caractérisée en ce que** les pièces de pression (7) sont disposées axialement à proximité des évidements (9) pour les parties dentées (11) dans le support de manchon (2).

5. Unité de synchronisation selon la revendication 4, **caractérisée en ce que** les pièces de pression (7) comprennent des éléments de billes (17) poussés par un ressort, qui coopèrent avec un agencement de rainure périphérique intérieure (8) du manchon de commutation (6), afin de garantir une mobilité axiale des pièces de pression (7) lors d'un mouvement axial du manchon de commutation (6).
